# EUROPÄISCHE PATENTANMELDUNG

(11) **EP 3 406 920 A2**
(43) Veröffentlichungstag der Anmeldung: **28.11.2018**
(21) Anmeldenummer: 18173011.0
(22) Anmeldetag: 17.05.2018
(51) Int. Cl.: F16C 3/02, F16D 1/10, B29C 70/86, B29C 65/64, F16D 1/027

(54) **WELLE AUS FASERVERBUNDWERKSTOFF UND VERFAHREN ZUR HERSTELLUNG DER WELLE**

(30) Priorität: 18.05.2017 DE 102017208424
(71) Anmelder: Rolls-Royce Deutschland Ltd & Co KG, 15827 Blankenfelde-Mahlow (DE)
(72) Erfinder: OESSENICH, Rüdiger, 15834 Rangsdorf (DE); HERRADOR MORENO, Magdalena, 10827 Berlin (DE); ERNSTBERGER, Thomas, 09569 Oederan (DE); EULITZ, Jan, 01705 Freital (DE)
(74) Vertreter: Maikowski & Ninnemann Patentanwälte Partnerschaft mbB

(57) **Zusammenfassung**

Die Erfindung betrifft eine Welle (1), insbesondere Radialwelle eines Flugzeugtriebwerks, mit einer Hohlwelle aus Faserverbundwerkstoff in einer ersten Mehrlagenanordnung (10) und Anschlussbereichen (11, 12) an den jeweiligen Enden der Welle (1) für jeweils ein Anschlusselement (31, 32). Die Verbindung von Welle (1) und den Anschlusselementen (31, 32) ist formschlüssig. Die Anschlussbereiche (11, 12) weisen eine zweite Mehrlagenanordnung (20) aus Faserverbundwerkstoff auf, deren Lagen auf der ersten Mehrlagenanordnung (10) der Welle (1) angeordnet sind. Ferner betrifft die Erfindung ein Verfahren zur Herstellung der Welle (1).

## Beschreibung

Die Erfindung betrifft eine Welle mit den Merkmalen des Anspruchs 1 und ein Verfahren zur Herstellung der Welle mit den Merkmalen des Anspruchs 12.

Wellen dienen der Übertragung von Drehmomenten, die z.B. durch Anschlusselemente in die Welle eingebracht werden. Dabei werden Wellen insbesondere auch aus mehreren Faserlagen aufgebaut, wie das z.B. aus der DE 10 2012 022 198 A1 oder der DE 10 2012 022 260 bekannt ist.

Eine typische Anwendung für eine solche Welle ist eine Radialwelle, die einen Hilfsgeräteträger über ein Winkelgetriebe mit einer Welle in einem Flugzeugtriebwerk verbindet. Der Energiefluss erfolgt über die Radialwelle in zwei Richtungen. Beim Triebwerksstart treibt ein Starter (üblicherweise mit Druckluft betrieben), der auf dem Hilfsgeräteträger angeflanscht ist, die Hochdruckwelle des Flugzeugtriebwerks über die Radialwelle an. Wenn das Flugzeugtriebwerk läuft, wird über die Radialwelle Leistung von der Hochdruckwelle an den Hilfsgeräteträger abgegeben, und so die darauf befindlichen Hilfsgeräte (z.B. Brennstoffpumpe, Öldruckpumpe, Ölabscheider, Hydraulikpumpe, Generator für die elektronische Triebwerksteuerung) angetrieben.

Aus diesen Belastungen ergibt sich, dass Wellen, insbesondere Radialwellen, für Flugzeugtriebwerke kompakt, robust und gleichzeitig leicht ausgebildet sein sollten.

Dies wird durch eine Welle mit den Merkmalen des Anspruchs 1 gewährleistet.

Dazu weist die Welle, insbesondere eine Radialwelle eines Flugzeugtriebwerks, eine Hohlwelle aus Faserverbundwerkstoff in einer ersten Mehrlagenanordnung auf. Anschlussbereiche an den jeweiligen Enden der Welle dienen der Aufnahme jeweils eines Anschlusselements, z.B. aus Metall. Die Verbindung von Welle und den Anschlusselementen ist formschlüssig und / oder kraftschlüssig ausgebildet. Die Anschlussbereiche weisen eine zweite Mehrlagenanordnung aus Faserverbundwerkstoff auf, deren Lagen aus Fasermaterial auf der ersten Mehrlagenanordnung der Welle angeordnet sind.

Durch die getrennte Aufteilung in zwei Mehrlagenanordnungen wird die Herstellung der Welle vereinfacht. Auch ist es möglich, die Wellen in dem vorhandenen, in der Regel kleinen Bauraum anzuordnen.

Die zweite Mehrlagenanordnung kann dabei eine Wicklung aus Fasermaterial aufweisen, die z.B. im Anschluss nach der Herstellung der zweiten Mehrlagenanordnung aufgebracht werden kann. Zusätzlich oder alternativ kann die Welle auch ein vorgefertigtes gewickeltes Bauelement, insbesondere in Form eines Faserrings aufweisen. Der Faserring kann z.B. separat gewickelt, infiltriert und ausgehärtet werden.

Die erste Mehrlagenanordnung kann in einer Ausführungsform zwischen 6 und 20 Lagen Fasermaterial aufweisen, insbesondere 12 Lagen Fasermaterial und / oder in einer zweiten Mehrlagenanordnung mit zwischen 3 und 10, insbesondere 6 Lagen Fasermaterial.

Dabei weist die erste Mehrlagenanordnung in einer Ausführungsform mindestens eine Lage aus Fasermaterial mit einem Wicklungswinkel von absolut mehr als 10° und weniger als absolut 89° gegenüber der Mittelachse der Welle auf. Durch die Wahl des Wicklungswinkels können die Widerstandsfähigkeit gegenüber Torsion und Biegung gezielt beeinflusst werden. Geneigte Wicklungen haben dabei einen höheren Torsionswiderstand als flache Wicklungen. Flache Wicklungswinkel haben dabei einen höheren Widerstand gegen eine Biegung der Gesamtwelle.

In einer Ausführungsform verändern sich in mindestens einem Teil der Lagen aus Fasermaterial der ersten Mehrlagenanordnung die Wicklungswinkel gegenüber der Mittelachse der Welle in konstanten Beträgen. Dies bedeutet, dass eine Reihe benachbarter Lagen der ersten Mehrlagenanordnung sich jeweils um einen konstanten Wicklungswinkelbetrag unterscheiden.

In einer weiteren Ausführungsform wechseln sich in mindestens einem Teil der Lagen aus Fasermaterial der ersten Mehrlagenanordnung die Wicklungswinkel gegenüber der Mittelachse der Welle nach einem vorbestimmten Muster ab, insbesondere wechseln sich ein relativ größerer Wicklungswinkel und ein minimaler Wicklungswinkel ab.

Insbesondere kann in mindestens einem Teil der Lagen aus Fasermaterial der ersten Mehrlagenanordnung der Absolutbetrag der Wicklungswinkel gegenüber der Mittelachse der Welle 11°, 27°, 29°, 31°, 34°, 36°, 38° und / oder von 42° betragen, d.h. ein Wicklungswinkel kann z.B. +/- 11° sein.

In einer weiteren Ausführungsform weist die zweite Mehrlagenanordnung mindestens eine Schicht aus Fasermaterial auf, bei der der Absolutbetrag des Wicklungswinkels gegenüber der Mittelachse der Welle zwischen 80° und 90°, insbesondere 87°, beträgt.

Ferner können in einer Ausführungsform mindestens zwei benachbarte Lagen der Mehrlagenanordnungen unterschiedliche Wicklungswinkel aufweisen.

Durch die Verwendung unterschiedlicher Wicklungswinkel in der Mehrlageanordnung wird während der Herstellung der Welle eine gute Infiltration mit Harz erreicht.

Die Anschlusselemente dienen der Einleitung und der Ausleitung von Drehmomenten in bzw. aus der Welle. Dazu weisen die Anschlussbereiche in einer Ausführungsform im Inneren, insbesondere in der ersten Mehrlagenanordnung, eine sinusoidale Querschnittsform für die Bildung des Formschlusses mit den Anschlusselementen auf. An der Innenseite entsteht somit eine regelmäßige (wellenartige) Struktur, die mit einer entsprechenden Kontur der Anschlusselemente zusammenwirken kann.

In einer weiteren Ausführungsform weist ein Mittelteil der Welle zwischen den Anschlusselementen abschnittsweise oder vollständig einen sinusoidalen Querschnitt auf. Somit kann die sinusoidale Struktur der Wandung sich nicht nur auf die Endbereiche der Welle erstrecken, sondern kann auch auf der gesamten Länge der Welle angeordnet sein. Damit kann sich u.U. ein fertigungstechnischer Fortschritt gegen über einen kreisförmigen Querschnitt ergeben.

Zur Herstellung des Verbundwerkstoffes der Welle werden die Lagen der Mehrlagenanordnungen gewickelt, in einer Form mit einem Harz infiltriert und ausgehärtet. Dabei dienen insbesondere Lücken zwischen den Mehrlagenanordnungen in den Anschlussbereichen gezielt der Aufnahmen von Harz. Diese Lücken können insbesondere bei der Verwendung eines sinusoidalen Querschnittes der inneren, ersten Mehrlagenanordnung aufgefüllt werden.

In einer weiteren Ausführungsform liegt zwischen den Anschlusselementen und der ersten Mehrlagenanordnung in den Anschlussbereichen mindestens in Teilbereichen eine Klebeverbindung vor. Damit kann neben dem Formschluss auch ein Stoffschluss hergestellt werden. Als Kleber kann z.B. Loctite 648 dienen. Dieser Kleber härtet anaerob bei Raumtemperatur aus.

Auch können die Lagen der Mehrlagenanordnungen mindestens teilweise aus unterschiedlichen Materialien bestehen. Damit kann eine Anpassung an bestimmte Belastungen gezielt erreicht werden.

Zur besseren Führung während der Montage ist in einer Ausführungsform am Umfang der Anschlusselemente mindestens ein Vorsprung in radialer Richtung zum Eingriff in eine Vertiefung an der Innenseite der ersten Mehrlagenanordnung angeordnet. Dabei sind in einer Ausführungsform die Materialien so ausgewählt, dass bei Temperaturen oberhalb der Raumtemperatur der mindestens eine Vorsprung auf Grund der thermischen Ausdehnung in die Innenseite der der ersten Mehrlagenanordnung eindringt, bei Temperaturen unterhalb der Raumtemperatur eine Lücke zwischen dem mindestens einen Vorsprung und der Innenseite der ersten Mehrlagenanordnung entsteht.

Die Aufgabe wird auch durch ein Verfahren mit den Merkmalen des Anspruchs 12 gelöst.

Dabei wird zuerst eine erste Mehrlagenanordnung als Teil der Welle aufgewickelt. Anschließend wird eine zweite Mehrlagenanordnung jeweils an den Enden der Welle in Anschlussbereichen für Anschlusselemente auf der ersten Mehrlagenanordnung angeordnet.

So kann mindestens eine der zweiten Mehrlagenanordnungen durch Fasern gewickelt werden oder als vorgefertigter Faserring aufgebracht werden. Somit können die zweiten Mehrlagenanordnungen an den Enden der Welle gleich oder unterschiedlich ausgebildet sein. Die Verwendung von vorgefertigten Faserringen erleichtert die Montage.

Weitere Ausführungsformen des Verfahrens sind in den Unteransprüchen enthalten.

Insbesondere kann mindestens ein metallisches Anschlusselement, insbesondere im Bereich der Zähne ein vorbestimmtes Übermaß aufweisen, wobei der Bereich, insbesondere im Bereich der Zähne durch Aufkohlen gehärtet wird und anschließend eine weitere abtragende und / oder härtende Bearbeitung erfolgt.

Das Übermaß wird als Geometriefaktor so groß gewählt, dass das insbesondere die Verformungen durch thermische Behandlungen (z.B. nach dem Härten) kompensiert werden können.

Im Zusammenhang mit den in den Figuren dargestellten Ausführungsbeispielen wird die Erfindung erläutert. Dabei zeigt
- Fig. 1: eine vereinfachte Schnittansicht durch eine erste Ausführungsform einer Welle;
- Fig. 2: eine Schnittansicht durch ein erstes Anschlusselement entlang der Linie C-C in der Fig. 1;
- Fig. 3: eine Schnittansicht durch ein zweites Anschlusselement entlang der Linie D-D der Fig. 1;
- Fig. 4: eine erste Schnittansicht durch die Wandung der Wellenanordnung im Mittelteil beim Detail E in der Fig. 1;
- Fig. 5: eine zweite Schnittansicht durch die Wandung der Wellenanordnung im Mittelteil beim Detail F in der Fig. 1;
- Fig. 6: eine dritte Schnittansicht durch die Wandung der Wellenanordnung im Mittelteil beim Detail G in der Fig. 1;
- Fig.7: eine vereinfachte Schnittansicht durch eine zweite Ausführungsform einer Welle mit Anschlusselementen;
- Fig. 8: eine Ansicht auf die Stirnseite eines der Anschlusselemente gemäß Fig. 7;
- Fig. 9: eine vereinfachte Stirnansicht einer Ausführungsform einer Welle und eines Anschlusselementes mit einem Vorsprung zur Führung bei der Montage;
- Fig. 10: eine Alternative zur Ausführungsform gemäß Fig. 9;
- Fig. 11: eine weitere Alternative zur Ausführungsform gemäß Fig. 9;
- Fig. 12: eine Detaildarstellung der Bearbeitung von Zähnen eines Anschlusselementes.

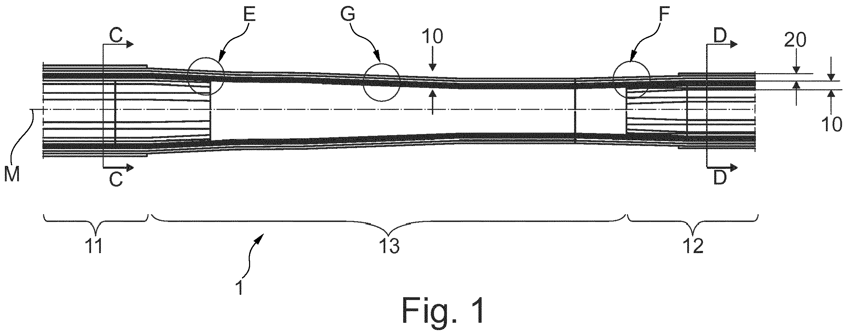

In Fig. 1 ist eine Ausführungsform einer Welle 1 in einer Faserverbundbauweise dargestellt. Solche Wellen 1 werden z.B. als Radialwellen in Flugzeugtriebwerken eingesetzt. Solche Radialwellen haben z.B. Längen zwischen 200 und 600 mm, insbesondere zwischen 300 und 500 mm. Die Außendurchmesser können bei solchen Radialwellen zwischen 25 und 50 mm liegen. Die Wandungen der Welle 1, die durch Faserlagen, hier Kohlefaserbänder, gebildet werden, haben typischerweise Dicken zwischen 2 und 10 mm, wobei die Wandungen - wie gleich noch erläutert wird - an unterschiedlichen Stellen der Welle 1 unterschiedlich dick ausgebildet ist. In alternativen Ausführungsformen können andere Abmessungen für die Längen, Durchmesser und / oder Wanddicken verwendet werden. Auch ist ein Einsatz solcher Wellen in Verbrennungsmotoren oder anderen Maschinen möglich, in denen Drehmomente übertragen werden sollen.

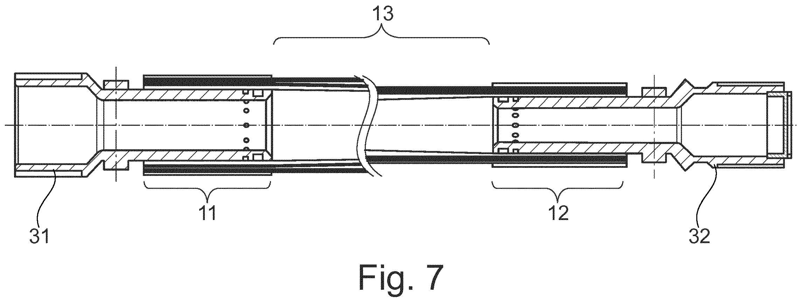

Die Welle 1 weist einen Mittelteil 13 auf, an dessen Enden jeweils Anschlussbereiche 11, 12 angeordnet sind. Die Anschlussbereiche 11, 12 dienen zur formschlüssigen Verbindung mit hier nicht dargestellten Anschlusselementen 31, 32 (siehe Fig. 7). Der Mittelteil 13 der Welle 1 weist hier konische Abschnitte auf, kann aber grundsätzlich auch anders geformte Querschnitte aufweisen. So ist es grundsätzlich auch möglich, dass der Querschnitt der Welle sinusoidal ist.

Die Welle 1 weist als Hohlwelle durchgehend eine erste Mehrlagenanordnung 10 auf, d.h. eine Abfolge von gewickelten Faserlagen, wobei die Faserlagen in der Regel unterschiedliche Wicklungswinkel aufweisen.

Auf den Anschlussbereichen 11, 12 ist dann jeweils eine zweite Mehrlagenanordnung 20 angeordnet, so dass die Anschlussbereiche 11, 12 mehr Lagen aus Fasermaterial aufweisen als der Mittelteil 13.

Im vorliegenden Beispiel weist die erste Mehrlagenanordnung 10 zwölf Faserlagen auf, die zweite Mehrfaseranordnung 20 weist sechs Faserlagen auf.

In der hier dargestellten Ausführungsform unterscheiden sich die Lagen der Mehrlagenanordnungen 10, 20 durch die Wicklungsrichtung relativ zur Mittelachse M der Welle 1. Der Wicklungswinkel kann dabei grundsätzlich Absolutbeträge zwischen 0° (d.h. parallel zur Mittelachse M) und weniger als 90° (d.h. fast senkrecht zur Mittelachse M) aufweisen. Unter Absolutbeträgen der Wicklungswinkel sind dabei gleiche Winkelgrößen mit jeweils unterschiedlichen Wickelrichtungen (z.B. +/- 11°) zu verstehen.

In dem hier dargestellten Ausführungsbeispiel werden Faserlagen aus unterschiedlichen Materialien verwendet. Dabei können typischerweise Faserlagen mit den gleichen Wicklungswinkeln aus den gleichen Materialien gewickelt werden.

Beispielsweise kann für die erste Mehrlagenanordnung 10 folgende Schichtung aus zwölf Lagen verwendet werden, wobei die Lagen von der Mittelachse gesehen von innen nach außen gezählt werden:
Lage Wicklungswinkel gegen Mittelachse M
   1 +/- 42°
   2 +/- 38°
   3 +/- 36°
   4 +/- 34°
   5 +/- 11°
   6 +/- 31°
   7 +/- 11°
   8 +/- 29°
   9 +/- 11°
   10 +/- 27°
   11 +/- 11°
   12 +/- 11°

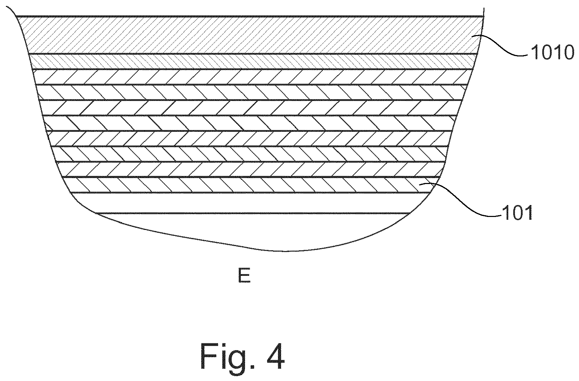

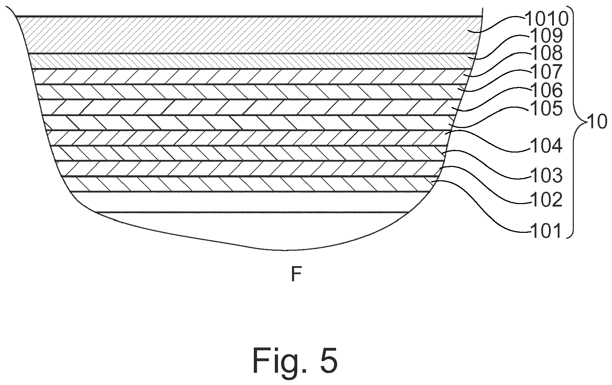

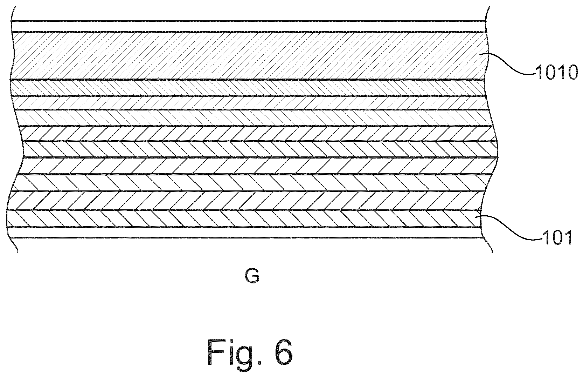

Diese Schichtung ist z.B. in den Details E, F und G der Fig. 4, 5 und 6 dargestellt, wobei unterschiedliche Schraffierungen unterschiedliche Wicklungswinkel symbolisieren.

Dabei weisen die Lagen 1 bis 4 einen vergleichsweise großen Wicklungswinkel auf, wobei sich die Wicklungswinkel der Lagen 2 bis 4 jeweils um einen konstanten Betrag von 2° unterscheiden. In den Lagen 5 bis 12 liegt ein anderes Muster der Wicklungswinkel vor. Dabei weisen die Lagen 6, 8, 10 betragsmäßig vergleichsweise große Wicklungswinkel auf, die benachbarten Lagen 5, 7, 9, 11 weisen jeweils den minimalen Wicklungswinkel von 11° auf.

Die äußeren Lagen (Nr. 10, 11, 12) sind in den Fig. 4, 5 und 6 jeweils als eine einzige Schicht 10₁₀ dargestellt. Andere Lagen von 10₉ bis 10₁ schließen sich dann an.

In den Fig. 4, 5 und 6 kann erkannt werden, dass die gleichen Lagen in der ersten Mehrschichtenanordnung 10 entlang der Welle 1 verwendet werden. Der Kern der Welle 1 besteht somit aus der ersten Mehrschichtenanordnung 10.

In Fig. 1 ist auch erkennbar, dass in den Anschlussbereichen 11, 12 die zweite Mehrlagenanordnung 20 auf die erste Mehrlagenanordnung 10 aufgewickelt ist. Es handelt sich in dieser Ausführungsform um sechs Lagen, die jeweils +/- 87° gegenüber der Mittelachse versetzt gewickelt sind.

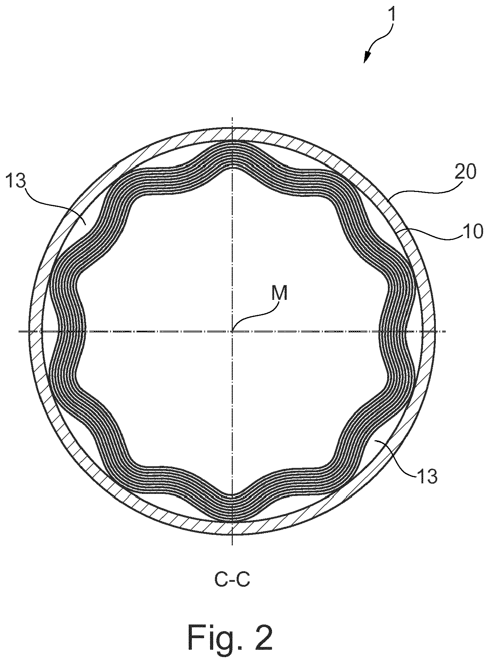

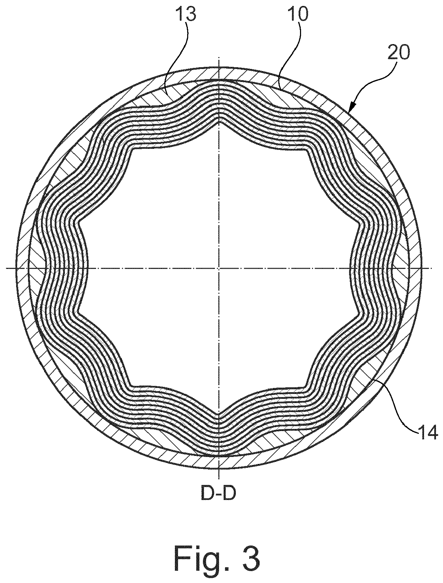

In Fig. 2 ist eine Schnittansicht entlang der Linie C-C der Fig. 1, in Fig. 3 eine Schnittansicht entlang der Linie D-D der Fig. 1 dargestellt.

Die Schnittansichten zeigen somit die Bereiche, die die hier nicht dargestellten Anschlusselemente 31, 32 mit einem Formschluss aufnehmen. Dazu weist die erste Mehrlagenanordnung 10 jeweils sinusoidale Querschnittsprofile auf. Nach außen wird diese erste Mehrlagenanordnung 10 durch die Lagen der zweiten Mehrlagenanordnung 20 umgeben. In den periodisch zwischen den Mehrlagenanordnungen 10, 20 auftretenden Lücken 14 sammelt sich Harz in gezielter Weise an.

In Fig., 7 ist eine weitere Ausführungsform einer Welle 1 dargestellt, bei der aber im Unterschied zur Darstellung der Fig. 1 die Anschlusselemente 31, 32 in den Anschlussbereichen 11, 12 eingesetzt sind. Dazu wird z.B. eine Klebeverbindung mit Loctite eingesetzt, so dass zusätzlich zu dem Formschluss ein Stoffschluss vorliegt.

Auch bei dieser Ausführungsform weisen die Anschlussbereiche 11, 12 der Welle 1 mehr Faserlagen auf, als der Mittelbereich 13, da die zweite Mehrlagenanordnung 20 nur an den Anschlussbereichen 11, 12 angeordnet ist.

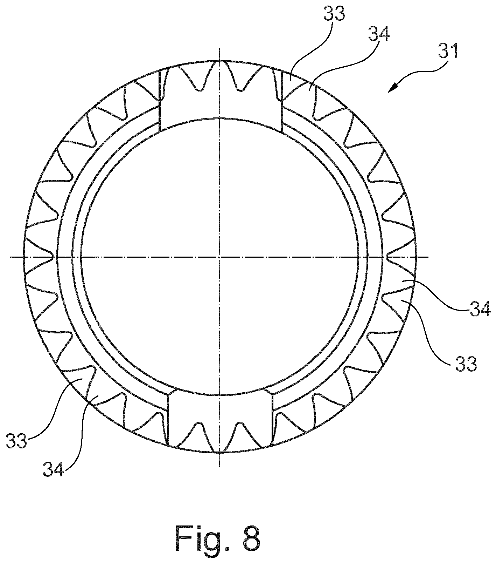

In Fig. 8 ist eine Ansicht auf die Stirnseite des zweiten Anschlusselementes 32 dargestellt. Am Umfang des zweiten Anschlusselementes 32 sind regelmäßig, periodisch Ausnehmungen 33 und Zähne 34 angeordnet, die in die formähnliche sinusoidale Struktur an der Innenseite des zweiten Anschlussbereiches 12 eingreifen kann (siehe Fig. 2).

Durch den Eingriff entsteht ein Formschluss. Die Gestaltung des ersten Anschlusselementes 31 ist analog.

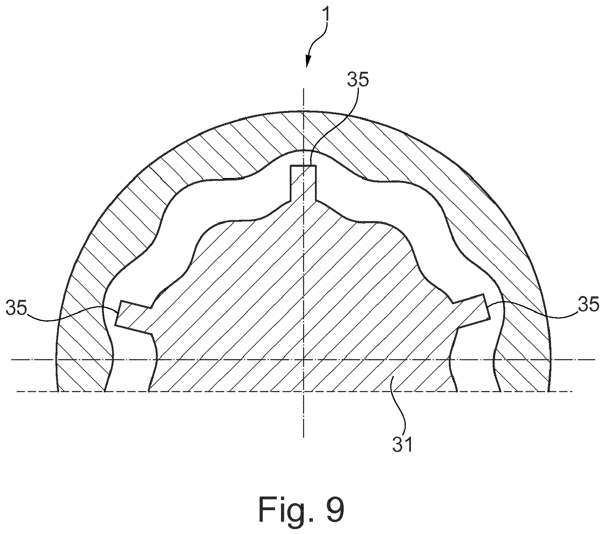

In Fig. 9 ist ein Teil einer Schnittansicht durch eine Ausführungsform der Welle 1 und das innenliegende Anschlusselement 31 dargestellt. Die Lagen der Mehrlagenanordnung 10 sind hier aus Gründen der Übersichtlichkeit nicht einzeln dargestellt. Die Innenseite der Welle 1 weist - wie z.B. die Ausführungsform der Fig. 2 - eine sinusoidale Kontur auf.

In der Ausführungsform gemäß Fig. 9 weist das metallische Anschlusselement 31 am Umfang mehrere Vorsprünge 35 auf, die radial in die konkaven Ausbuchtungen der Innenseite der Welle 1 eingreifen. Dabei können sich die Vorsprünge 35 längs in axialer Richtung erstrecken. Durch den Eingriff der Vorsprünge kann eine Ausrichtung des Anschlusselementes 31 bei der Montage in die Welle 1 erreicht werden. Bei dem Einschieben des Anschlusselementes 31 bei Raumtemperatur liegt der Vorsprung an in Innenseite der Wandung an, d.h. es gibt keinen Spalt. Bei einer Erhöhung der Temperatur dringt der Vorsprung 35 in die Innenseite der Wandung ein. Bei Temperaturen unterhalb der Raumtemperatur entsteht ein Spalt.

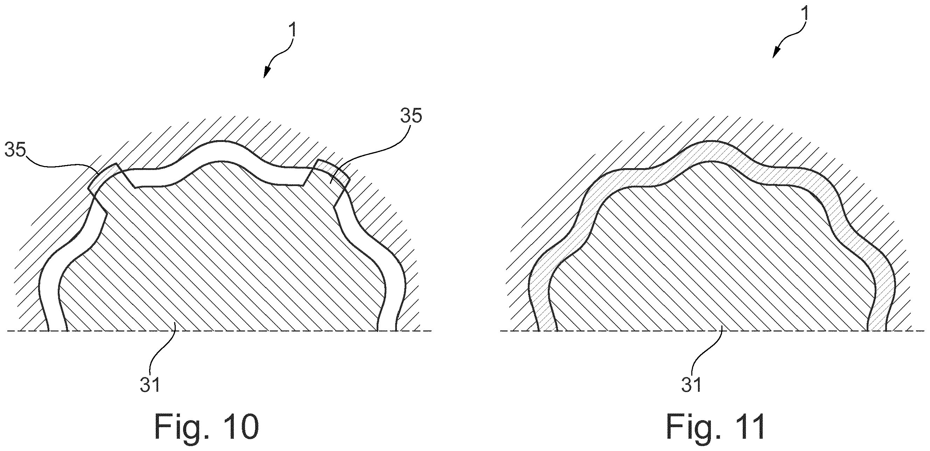

In Fig. 10 ist eine Variation der Ausführungsform gemäß der Fig. 9 dargestellt. Die Vorsprünge 35 stehen hier im Eingriff (Presssitz) mit der sinusoidalen Struktur. Die Räume zwischen der sinusoidalen Struktur werden dann noch mit einem Material ausgefüllt.

In Fig. 11 ist eine weitere Variation dargestellt. Hier liegt unter Arbeitsbedingungen ein kompletter Presssitz vor, d.h. nicht nur an den Vorsprüngen 35. Ein zusätzliches Material kann in den Spalt eingebracht werden.

Insbesondere bei den Varianten gemäß Fig. 10 und 11 wird ein Presssitz zwischen der Welle (aus CFK) mit der Sinusoidinnenkontur und dem Metallendstück mit Sinusoidaußenkontur verwendet, der über den Temperaturbereich von -40 bis 150°C besteht.

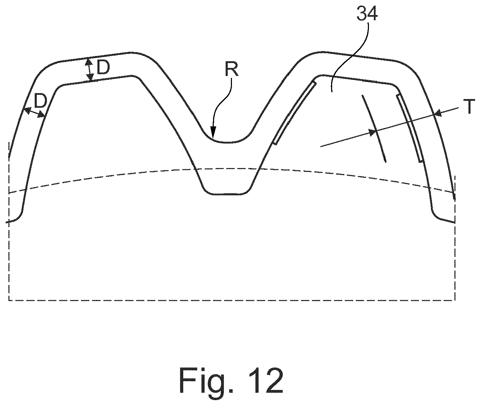

In Fig. 12 ist ein Detail einer weiteren Ausführungsform dargestellt, bei der ein metallisches Anschlusselement 31, 32 im Bereich der Zähne 34 ein vorbestimmtes Übermaß D aufweist, Das Übermaß D kann z.B. im Bereich zwischen 0,1 und 0,8 mm liegen, insbesondere bei 0,4 mm. Relativ ausgedrückt kann das Übermaß D einem Fünftel bis einem Drittel der Zahnhöhe entsprechen. Das Übermaß wird durch eine Beschichtung gebildet, die im Wesentlichen die Zähne 34 überall mit gleicher Dicke umgibt.

Der Rundungsradius R am Zahnfuß kann zwischen 0,1 und 0,8 mm, insbesondere bei 0,4 mm liegen.

In diesem Bereich werden die Zähne mindestens teilweise durch Aufkohlen gehärtet. Dies ist in Fig.12 am rechten Zahn 34 durch die verstärkten Linien an den Zahnflanken dargestellt. Die Härtungstiefe T kann zwischen 0,8 und 1,6 mm betragen, insbesondere 1,2 mm.

Anschließend erfolgt dann eine weitere abtragende und / oder härtende Bearbeitung des Bereichs am Anschlusselement.

### Bezugszeichenliste

- 1: Welle

- 10: erste Mehrlagenanordnung
- 10₁... 10₁₀: Lagen der ersten Mehrlagenanordnung
- 11: erster Anschlussbereich
- 12: zweiter Anschlussbereich
- 13: Mittelteil der Welle
- 14: Lücke

- 20: zweite Mehrlagenanordnung
- 20₁ .. 20₆: Lagen der zweiten Mehrlagenanordnung

- 31: erstes Anschlusselement
- 32: zweites Anschlusselement
- 33: Ausnehmungen
- 34: Zähne
- 35: Vorsprung

- D: Übermaß
- M: Mittelachse der Welle
- R: Rundungsradius
- T: Härtungstiefe

## Patentansprüche

1. Welle, insbesondere Radialwelle eines Flugzeugtriebwerks, mit einer Hohlwelle aus Faserverbundwerkstoff in einer ersten Mehrlagenanordnung (10) und Anschlussbereichen (11, 12) an den jeweiligen Enden der Welle (1) für jeweils ein Anschlusselement (31, 32), wobei die Verbindung von Welle (1) und den Anschlusselementen (31, 32) formschlüssig und / oder kraftschlüssig ist,
**dadurch gekennzeichnet, dass**
die Anschlussbereiche (11, 12) eine zweite Mehrlagenanordnung (20) aus Faserverbundwerkstoff aufweisen, deren Lagen auf der ersten Mehrlagenanordnung (10) der Welle (1) angeordnet sind.

2. Welle nach Anspruch 1, **dadurch gekennzeichnet, dass**
- die zweite Mehrlagenanordnung (20) eine Wicklung aus einem Fasermaterial und / oder ein vorgefertigtes gewickeltes Bauelement, insbesondere in Form eines Faserrings aufweist, und / oder
- die erste Mehrlagenanordnung (10) zwischen 6 und 20, insbesondere 12 Lagen Fasermaterial aufweist und / oder die zweite Mehrlagenanordnung (20) zwischen 3 und 10, insbesondere 6 Lagen Fasermaterial aufweist.

3. Welle nach Anspruch 1 oder 2, **dadurch gekennzeichnet, dass** die erste Mehrlagenanordnung (10) mindestens eine Lage aus Fasermaterial mit einem Wicklungswinkel von absolut mehr als 10° und weniger als absolut 89° gegenüber der Mittelachse (M) der Welle (1) aufweist, wobei sich insbesondere in mindestens einem Teil der Lagen aus Fasermaterial der ersten Mehrlagenanordnung (10) die Wicklungswinkel gegenüber der Mittelachse (M) der Welle (1) in konstanten Beträgen verändern.

4. Welle nach mindestens einem der vorhergehenden Ansprüche, **dadurch gekennzeichnet, dass**
- sich in mindestens einem Teil der Lagen aus Fasermaterial der ersten Mehrlagenanordnung (10) die Wicklungswinkel gegenüber der Mittelachse (M) der Welle (1) nach einem vorbestimmten Muster abwechseln, insbesondere sich ein größerer Wicklungswinkel und ein minimaler Wicklungswinkel abwechseln, und / oder
- in mindestens einem Teil der Lagen aus Fasermaterial der ersten Mehrlagenanordnung (10) der Absolutbetrag der Wicklungswinkel gegenüber der Mittelachse (M) der Welle (1) 11°, 27°, 29°, 31°, 34°, 36°, 38° und / oder 42° beträgt.

5. Welle nach mindestens einem der vorhergehenden Ansprüche, **dadurch gekennzeichnet, dass**
- die zweite Mehrlagenanordnung (20) mindestens eine Schicht aus Fasermaterial aufweist, bei der der Absolutbetrag des Wicklungswinkels gegenüber der Mittelachse (M) der Welle (1) zwischen 80° und 90°, insbesondere 87° beträgt, und / oder
- mindestens zwei benachbarte Lagen in den Mehrlagenanordnungen (10, 20) unterschiedliche Wicklungswinkel aufweisen.

6. Welle nach mindestens einem der vorhergehenden Ansprüche, **dadurch gekennzeichnet, dass**
- die Anschlussbereiche (11, 12) im Inneren, insbesondere in der ersten Mehrlagenanordnung (10), eine sinusoidale Querschnittsform für die Bildung des Formschlusses mit den Anschlusselementen (31, 32) aufweisen, und / oder
- ein Mittelteil (13) der Welle (1) zwischen den Anschlusselementen (10, 11) abschnittsweise oder vollständig einen sinusoidalen Querschnitt aufweist.

7. Welle nach mindestens einem der vorhergehenden Ansprüche, **dadurch gekennzeichnet, dass** die Lagen der Mehrlagenanordnungen (10, 20) mit einem Harz getränkt und ausgehärtet sind und/oder dass Lücken (14) zwischen den Mehrlagenanordnungen (10, 20) in den Anschlussbereichen gezielt der Aufnahme von Harz dienen.

8. Welle nach mindestens einem der vorhergehenden Ansprüche, **dadurch gekennzeichnet, dass** zwischen den Anschlusselementen (31, 32) und der ersten Mehrlagenanordnung (10) in den Anschlussbereichen (11, 12)mindestens in Teilbereichen eine Klebeverbindung vorliegt, insbesondere mit einem bei Raumtemperatur aushärtenden Kleber.

9. Welle nach mindestens einem der vorhergehenden Ansprüche, **dadurch gekennzeichnet, dass** die Lagen der Mehrlagenanordnungen (10, 20) mindestens teilweise aus unterschiedlichen Materialien bestehen.

10. Welle nach mindestens einem der vorhergehenden Ansprüche, **dadurch gekennzeichnet, dass** am Umfang der Anschlusselemente (31, 32) mindestens ein Vorsprung (35) in radialer Richtung zum Eingriff in eine Vertiefung an der Innenseite der ersten Mehrlagenanordnung (10) angeordnet ist, wobei insbesondere bei Temperaturen oberhalb der Raumtemperatur der mindestens eine Vorsprung (35) in die Innenseite der ersten Mehrlagenanordnung (10) eindringt, bei Temperaturen unterhalb der Raumtemperatur eine Lücke zwischen dem mindestens einen Vorsprung und der Innenseite der ersten Mehrlagenanordnung entsteht.

11. Flugzeugtriebwerk mit mindestens einer Welle, insbesondere einer Radialwelle, nach mindestens einem der vorhergehenden Ansprüche.

12. Verfahren zur Herstellung einer Welle, insbesondere nach einem der Ansprüche 1 bis 10, **dadurch gekennzeichnet, dass**
a) eine erste Mehrlagenanordnung (10) als Teil der Welle (1) aufgewickelt wird,
b) eine zweite Mehrlagenanordnungen (20) jeweils an den Enden der Welle (1) in Anschlussbereichen (11, 12) für Anschlusselemente (31, 32) auf die erste Mehrlagenanordnung (20) angeordnet wird.

13. Verfahren nach Anspruch 12, **dadurch gekennzeichnet, dass** die Lagen der Mehrlagenanordnungen (10, 20) zumindest nach einem Wickelvorgang mit Harz getränkt werden und / oder mindestens eine der zweiten Mehrlagenanordnung (20) gewickelt wird oder als vorgefertigter Faserring aufgebracht wird.

14. Verfahren nach Anspruch 12 oder 13, **dadurch gekennzeichnet, dass** für die erste Mehrlagenanordnung (10) mindestens eine Lage aus Fasermaterial mit einem Wicklungswinkel von absolut mehr als 10° und weniger als absolut 89° gegenüber der Mittelachse (M) der Welle (1) gewickelt wird,
- wobei insbesondere ein Teil der Lagen aus Fasermaterial der ersten Mehrlagenanordnung (10) jeweils mit Wicklungswinkeln gegenüber der Mittelachse (M) der Welle (1) gewickelt werden, die sich in konstanten Beträgen verändern, und
- wobei insbesondere mindestens ein Teil der Lagen aus Fasermaterial der ersten Mehrlagenanordnung (10) mit Wicklungswinkeln gegenüber der Mittelachse (M) der Welle (1) nach einem vorbestimmten Muster abwechselnd gewickelt werden, wobei sich insbesondere ein größerer Wicklungswinkel und ein minimaler Wicklungswinkel abwechseln.

15. Verfahren nach mindestens einem der Ansprüche 12 bis 14, **dadurch gekennzeichnet, dass**
a) mindestens ein metallisches Anschlusselement (31, 32), insbesondere im Bereich der Zähne (34) ein vorbestimmtes Übermaß (D) aufweist,
b) in dem Bereich, insbesondere in einem Teilbereich der Flanken der Zähne (34) durch Aufkohlen bis auf eine Härtetiefe (T) gehärtet wird und
c) anschließend eine weitere abtragende und / oder härtende Bearbeitung erfolgt.
